# EUROPÄISCHE PATENTSCHRIFT

(11) **EP 4 001 854 B1**
(45) Veröffentlichungstag und Bekanntmachung des Hinweises auf die Patenterteilung: **11.09.2024**
(21) Anmeldenummer: 21207678.0
(22) Anmeldetag: 11.11.2021
(51) Int. Cl.: G01D 11/28, G01D 11/24

(54) **SENSOR**
SENSOR
CAPTEUR

(30) Priorität: 24.11.2020 DE 202020106752 U
(43) Veröffentlichungstag der Anmeldung: 25.05.2022
(73) Patentinhaber: Leuze electronic GmbH + Co. KG, 73277 Owen/Teck (DE)
(72) Erfinder: Doll, Manfred, 73230 Kirchheim unter Teck (DE); Müller, Thomas, 73119 Zell u.A. (DE); Stepan, Jürgen, 73252 Lenningen (DE); Kharrazian, Reza, 72762 Reutlingen (DE); Langner, Stefan, 72800 Eningen u.A. (DE)
(74) Vertreter: Ruckh, Rainer Gerhard

(56) Entgegenhaltungen:
- EP-A2- 2 728 316
- DE-A1- 102007 028 909
- DE-U1- 202020 102 366

## Beschreibung

Derartige Sensoren weisen generell Sensorkomponenten zur Objekterfassung oder Codeerfassung sowie Elektronikkomponenten zur Auswertung von Sensorsignalen der Sensorkomponenten auf, wobei mit den Elektronikkomponenten abhängig von dieser Auswertung Ausgangssignale, insbesondere Objektfeststellungssignale generiert werden. Die Objektfeststellungssignale signalisieren im einfachsten Fall, ob ein Objekt im Erfassungsbereich vorhanden ist oder nicht. Die Sensorkomponenten und die Elektronikkomponenten sind generell in einem oder mehreren Gehäusen integriert.

Die Sensoren können allgemein als optische Sensoren, Ultraschallsensoren, Radarsensoren und dergleichen ausgebildet sein.

Zur Anzeige von Betriebszuständen ist es bekannt, als Anzeigen Leuchtdioden von außen sichtbar im Gehäuse zu integrieren. Die Leuchtdioden können sichtbares Licht in verschiedenen Farben oder mit verschiedenen Blinkfrequenzen emittieren, um so unterschiedliche Betriebszustände anzuzeigen.

Nachteilig dabei ist, dass diese lokalen Anzeigen oft nur schwer erkennbar sind. Besonders nachteilig ist, dass diese Anzeigen oft nur aus einem bestimmten Blickwinkel eingesehen werden können.

Die EP 2 728 316 A2 betrifft eine wenigstens eine Anzeige-Schicht die eine erste Anzeige-Schicht enthält, die eine obere Fläche, eine untere Fläche sowie eine oder mehrere Stirnwand/Stirnwände hat, die sich wenigstens teilweise zwischen dem Umfang der oberen Fläche und dem der unteren Fläche befindet/befinden, wobei die obere Fläche oder/und die untere Fläche der ersten Anzeige-Schicht eine polierte Oberfläche aufweist/aufweisen, die innere Reflexionen im Inneren der ersten Anzeige-Schicht erzeugt, und in der ersten Anzeige-Schicht Fluorophore eingebettet sind, eine erste Lichtquelle die in der Nähe der Anzeige-Schicht angeordnet ist, wobei das eingeleitete Licht im Inneren der Anzeige-Schicht reflektiert und durch die Fluorophore absorbiert wird, so dass verstärktes Licht erzeugt wird, das über die Stirnwände emittiert wird, und das verstärkte Licht das von der ersten Lichtquelle eingeleitete Licht mit wenigstens einer durch die Fluorophore modifizierten Eigenschaft enthält und ein Gehäuse, das die erste Lichtquelle sowie die erste Anzeige-Schicht wenigstens teilweise umschließt. Die eine oder die mehreren Stirnwand/Stirnwände der Anzeige-Schicht verläuft/verlaufen so um das Gehäuse herum, dass die Anzeige-Schicht über 360° um das Gehäuse herum sichtbar ist, und die eine oder die mehreren Stirnwand/Stirnwände der ersten Anzeige-Schicht an einer Außenfläche des Gehäuses freiliegt/freiliegen.

Die DE 20 2020 102 366 U1 betrifft einen optischen Sensor, mit einem Empfänger in der Art eines Bildsensors, und mit einer Einrichtung zur Ausrichtung des optischen Sensors zu einer Markierung, wobei mittels des Empfängers die Markierung ortsaufgelöst erfasst ist. In einer Auswerteeinheit wird eine richtungsabhängige Abweichung der Lage der Markierung von einer Sollposition bestimmt. Die Einrichtung weist optische und/oder akustische Signalmittel auf, die zur Anzeige der Ausrichtgüte der Markierung ausgebildet sind.

Die DE 10 2007 028 909 A1 betrifft eine Induktivsensoreinheit zur Positionserkennung eines Gegenstands umfasst ein Gehäuse, das einen Innenraum begrenzt. Im Innenraum des Gehäuses ist wenigstens ein Induktivsensor zur Erfassung einer Änderung der Position des Gegenstands in einem außerhalb des Gehäuses angeordneten Messbereich relativ zur Induktivsensoreinheit mittels der Erfassung der Änderung einer durch den Induktivsensor erfassbaren Induktivität angeordnet. Das Gehäuse ist zur Ausbildung einer explosionssicheren Induktivsensoreinheit druckfest und luftdicht ausgebildet. Damit hält das Gehäuse einer innerhalb des Gehäuses stattfindenden Explosion stand. Das Gehäuse besteht aus einem metallischen Grundkörper mit einem Fenster und einem Verschlusselement aus Kunststoff, dass das Fenster abdichtet. Als Kunststoff wird insbesondere PEEK (Polyetheretherketon) verwendet.

Der Erfindung liegt die Aufgabe zugrunde, eine Anzeige für einen Sensor der eingangs genannten Art bereitzustellen, welche bei konstruktiv einfachem Aufbau eine hohe Funktionalität aufweist.

Zur Lösung dieser Aufgabe sind die Merkmale des Anspruchs 1 vorgesehen. Vorteilhafte Ausführungsformen und zweckmäßige Weiterleitungen der Erfindung sind in den abhängigen Ansprüchen beschrieben.

Die Erfindung betrifft einen Sensor zur Erfassung von Objekten in einem Erfassungsbereich mit Sensorkomponenten, die für eine Objekterfassung oder Codeerfassung ausgebildet sind, und mit Elektronikkomponenten, die für eine Auswertung von Sensorsignalen der Sensorkomponenten ausgebildet sind, wobei die Sensorkomponenten und Elektronikkomponenten in wenigstens einem Gehäuse integriert sind. Zwischen Grenzflächen zweier Gehäuseelemente des Gehäuses ist ein lichtleitendes, in Umfangsrichtung des Gehäuses umlaufendes Anzeigeelement vorgesehen. Die Gehäuseelemente sind unter Zwischenlagerung des Anzeigeelements miteinander verbindbar, wobei mit dem Anzeigeelement eine Ausrichtanzeige durchführbar ist. Dem Anzeigeelement sind in unterschiedlichen Positionen im Gehäuse angeordnete Lichtquellen zugeordnet, die zur Emission von sichtbaren Lichtstrahlen ausgebildet sind, und welche abhängig von Sensorsignalen der Sensorkomponenten aktiviert werden. Dabei sind einzelne Lichtquellen selektiv aktivierbar, wodurch unterschiedliche Bereiche des Anzeigeelements beleuchtet sind, wobei mit den beleuchteten Bereichen eine richtungsabhängige Anzeige der Ausrichtung des Sensors relativ zu einem zu detektierenden Objekt erfolgt.

Die Gehäuseelemente bilden Segmente eines Gehäuseteils. Die Gehäuseelemente sind unter Zwischenlagerung des Anzeigeelements miteinander verbindbar.

Ein wesentlicher Vorteil der Erfindung besteht darin, dass das Anzeigeelement an den Grenzflächen zwischen den Gehäuseelementen verlaufend angeordnet ist und damit vorteilhaft eine ausgedehnte Anzeige ausbildet, die aus verschiedenen Richtungen gut erkennbar ist.

Erfindungsgemäß ist das Anzeigeelement in Umfangsrichtung des Gehäuses umlaufend angeordnet.

Das Anzeigeelement erstreckt sich somit über den gesamten Umfang des Gehäuses und kann somit von allen Seiten gut erkannt werden.

Ein weiterer wesentlicher Vorteil der Erfindung besteht darin, dass durch eine selektive Aktivierung einzelner Lichtquellen gezielt einzelne Bereiche des Anzeigeelements beleuchtet werden können, wodurch eine ortsabhängige Anzeige ermöglicht wird. Natürlich kann durch gleichzeitiges Aktivieren aller Lichtquellen auch das gesamte Anzeigeelement beleuchtet werden, so dass eine über das gesamte Anzeigeelement homogene, gleichförmige Anzeige realisiert werden kann.

Das Anzeigeelement ist lichtleitend, so dass lokal von einer Lichtquelle in das Anzeigeelement eingekoppelte Lichtstrahlen innerhalb eines ausgedehnten Bereichs des Anzeigeelements sichtbar sind.

Weiter vorteilhaft ist das Anzeigeelement opak eingefärbt und bildet einen Diffusor aus.

Durch die diffuse Lichtabstrahlung ist die damit bewirkte Anzeige aus unterschiedlichen Betrachtungswinkeln gut sichtbar.

Die Sichtbarkeit wird dadurch noch verbessert, dass ein Teil des Anzeigeelements über die Grenzflächen hervorsteht.

Das Anzeigeelement bildet dann eine erhabene Struktur an der Außenseite des Gehäuses.

Gemäß einer konstruktiv vorteilhaften Ausgestaltung ist das Anzeigeelement einstückig ausgebildet.

Das so ausgebildete Anzeigeelement kann einfach und schnell zwischen den Gehäuseelementen durch Einlegen montiert werden.

Besonders vorteilhaft bildet das Anzeigeelement eine Dichtung aus.

Durch diese Doppelfunktion wird die Funktionalität des Anzeigeelements erheblich erhöht. Zur Ausbildung der Dichtung besteht das Anzeigeelement vorteilhaft aus einem Kunststoff und ist zweckmäßig als Hybridteil mit einer Weichkomponente ausgebildet, wodurch eine gute Dichtungsfunktion erhalten wird.

Gemäß einer vorteilhaften Ausführungsform ist ein Gehäuseelement als Gehäusekörper und ein Gehäuseelement als Gehäusedeckel ausgebildet.

Das Gehäuse ist somit zweiteilig ausgebildet, wobei der Gehäusekörper die Sensorkomponenten und Elektronikkomponenten aufnimmt. Die Öffnung des Gehäusekörpers, über welche die Sensorkomponenten und Elektronikkomponenten in den Gehäusekörper einführbar sind, wird mit dem Gehäusedeckel verschlossen. Vorteilhaft erstreckt sich die Öffnung des Gehäusekörpers über eine gesamte Seitenfläche, die mit dem Gehäusedeckel abgeschlossen wird. Das Anzeigeelement wird zwischen den über den gesamten Umfang des Gehäuses umlaufenden Grenzflächen des Gehäusekörpers und Gehäusedeckels eingelegt und sorgt dabei für eine vollständige Abdichtung des Gehäuses. Zudem ist das Anzeigeelement und die mit diesem durchführbare optische Anzeige von allen Seiten des Gehäuses sichtbar.

Das Gehäuse weist bevorzugt eine kubische, das heißt allgemein eine quaderförmige Außenkontur auf. In diesem Fall ist es zweckmäßig, wenn die Lichtquellen im Bereich von Gehäusekanten des Gehäuses angeordnet sind.

Gemäß einer konstruktiv besonders einfachen Ausgestaltung werden Lichtstrahlen einer Lichtquelle direkt in das Anzeigeelement eingestrahlt.

Alternativ werden Lichtstrahlen einer Lichtquelle über einen Lichtleiter in das Anzeigeelement eingestrahlt.

Mit den Lichtleitern kann insbesondere eine Strahlumlenkung der von den Lichtquellen emittierten Lichtstrahlen erfolgen. Dies ermöglicht eine einfache Optimierung der Anbringung der Lichtquellen innerhalb des Gehäuses. Insbesondere können die Lichtquellen auf einer Leiterplatte angeordnet sein, auf welcher auch die Sensorkomponenten und/oder Elektronikkomponenten angeordnet sind.

Bei beiden Ausführungsformen brauchen für die Lichtquellen keine separaten Leiterplatten vorgesehen werden, wodurch der konstruktive Aufwand des Sensors weiter reduziert werden kann.

Erfindungsgemäß ist mit dem Anzeigeelement eine Ausrichtanzeige durchführbar.

Dabei sind selektiv einzelne Lichtquellen aktivierbar, wobei mit deren beleuchteten Bereichen eine richtungsabhängige Anzeige von Fehlausrichtungen erfolgt.

Besonders geeignet hierfür ist die Anbringung der Lichtquellen im Bereich der Kanten eines kubischen Gehäuses des Sensors.

Beispielsweise kann durch Aktivierung einer Lichtquelle in einem vorgegebenen Bereich des Gehäuses, insbesondere einer Gehäusekante, signalisiert werden, dass hier bereits eine gute Ausrichtung vorliegt, während mit deaktivierten Lichtquellen in anderen Bereichen signalisiert wird, dass noch keine hinreichende Ausrichtung vorliegt. Eine vollständige Ausrichtung des Sensors wird dann somit derart signalisiert, dass alle Lichtquellen aktiviert sind, so dass alle zugeordneten Bereiche des Anzeigeelements beleuchtet sind. Generell ist natürlich eine komplementäre Vorgehensweise möglich, dass Lichtquellen deaktiviert sind, wenn der zugeordnete Bereich des Gehäuses gut ausgerichtet ist, und dass aktivierte Lichtquellen ausreichend ausgerichtete Bereiche des Gehäuses markieren.

Erfindungsgemäß werden die Lichtquellen abhängig von Sensorsignalen der Sensorkomponenten aktiviert.

Damit kann die Ausrichtung automatisiert, das heißt ohne externe Ausrichthilfen durchgeführt werden.

Mit dem Anzeigeelement können auch weitere Anzeigen realisiert werden.

Insbesondere bildet das Anzeigeelement eine Betriebsbereitschaftsanzeige aus.

Auch können unterschiedliche Betriebszustände des Sensors angezeigt werden, beispielsweise ob sich der Sensor in einem Einlernmodus oder in einem Arbeitsmodus befindet.

Weiterhin sind in dem Sensor generierte Objektfeststellungssignale mit dem Anzeigeelement anzeigbar.

Bei diesen Ausbildungen der Anzeigen können insbesondere alle Lichtquellen gleichzeitig aktiviert sein.

Vorteilhaft emittieren die Lichtquellen zur Anzeige unterschiedlicher Zustandsgrößen Lichtstrahlen in Form von Dauerlicht oder mit vorgegebenen Blinkfrequenzen.

Die Lichtquellen sind dabei bevorzugt als Leuchtdioden ausgebildet, die Licht mit bestimmter Farbe abstrahlen. Durch die unterschiedlichen Ansteuerungen der Lichtquellen, dass diese entweder Dauerlicht oder gepulstes Licht mit unterschiedlichen Blinkfrequenzen abstrahlen, können unterschiedliche Betriebszustände des Sensors angezeigt werden.

Der erfindungsgemäße Sensor kann als Ultraschallsensor, Radarsensor und dergleichen ausgebildet sein. Insbesondere kann der Sensor auch als optischer Sensor, beispielsweise als Kamerasensor ausgebildet sein. Insbesondere kann der Sensor als Codeleser ausgebildet sein.

Die Erfindung wird im Folgenden anhand der Zeichnungen erläutert. Es zeigen:
- Figur 1:: Ausführungsbeispiel des erfindungsgemäßen Sensors.
- Figur 2:: Perspektivische Ansicht des Gehäuses des Sensors gemäß Figur 1.
- Figur 3:: Erste Anordnung einer Lichtquelle relativ zu einem Anzeigeelement für den Sensor gemäß Figur 1.
- Figur 4:: Zweite Anordnung einer Lichtquelle relativ zu einem Anzeigeelement für den Sensor gemäß Figur 1.
- Figur 5:: Dritte Anordnung einer Lichtquelle relativ zu einem Anzeigeelement für den Sensor gemäß Figur 1.

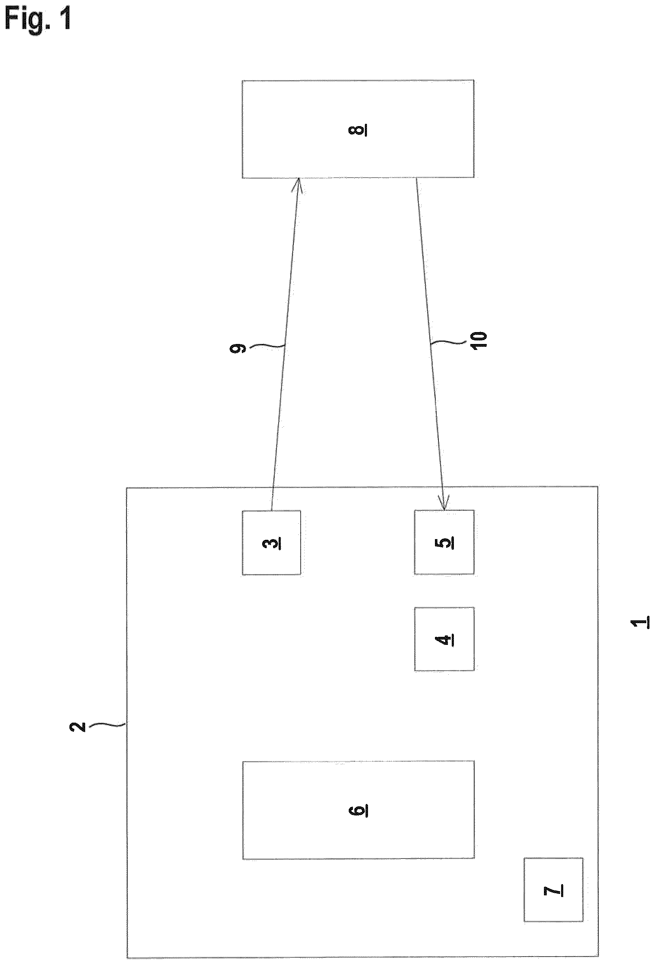

Figur 1 zeigt ein Ausführungsbeispiel eines Sensors in Form eines optischen Sensors 1. Der optische Sensor 1 weist ein Gehäuse 2 auf, in welchem sämtliche Sensorkomponenten und Elektronikkomponenten integriert sind.

Der optische Sensor 1 weist als Sensorkomponenten eine Beleuchtungseinheit 3 auf, die in Form einer Anordnung von Leuchtdioden oder Laserdioden gebildet sein kann. Weiterhin weist der optische Sensor 1 als Sensorkomponenten einen Empfänger in Form eines Bildsensors 4 mit einer matrixförmigen Anordnung von Empfangselementen auf, das heißt der optische Sensor 1 bildet einen Kamerasensor auf. Der Bildsensor 4 kann von einem CCD- oder CMOS-Array gebildet sein. Dem Bildsensor 4 ist eine Empfangsoptik in Form eines Objektivs 5 vorgeordnet. Weiterhin weist der optische Sensor 1 als Elektronikkomponenten eine Steuer- und Auswerteeinheit 6 in Form eines Mikroprozessors, Controllers FPGA oder dergleichen auf. Schließlich weist der optische Sensor 1 als Elektronikkomponenten eine Schnittstelle 7 auf, über welche Signale ein- oder ausgebbar sind. Zur Detektion von Objekten 8 emittiert die Beleuchtungseinheit 3 Sendelichtstrahlen 9, die von zu detektierenden Objekt 8 als Empfangslichtstrahlen 10 auf den Bildsensor 4 zurück reflektiert werden. Abhängig von im Bildsensor 4 generierten Empfangssignalen wird in der Steuer- und Auswerteeinheit 6 ein Objektfeststellungssignal generiert, das über die Schnittstelle 7 ausgegeben wird.

Der optische Sensor 1 kann zur Überwachung eines Überwachungsbereichs ausgebildet sein. In diesem Fall generiert der optische Sensor 1 ein Objektfeststellungssignal in Form eines binären Schaltsignals, dessen Signalzustände angeben, ob sich ein Objekt 8 im Überwachungsbereich befindet oder nicht. Der optische Sensor 1 kann alternativ zur Objektidentifikation oder als Codeleser ausgebildet sein.

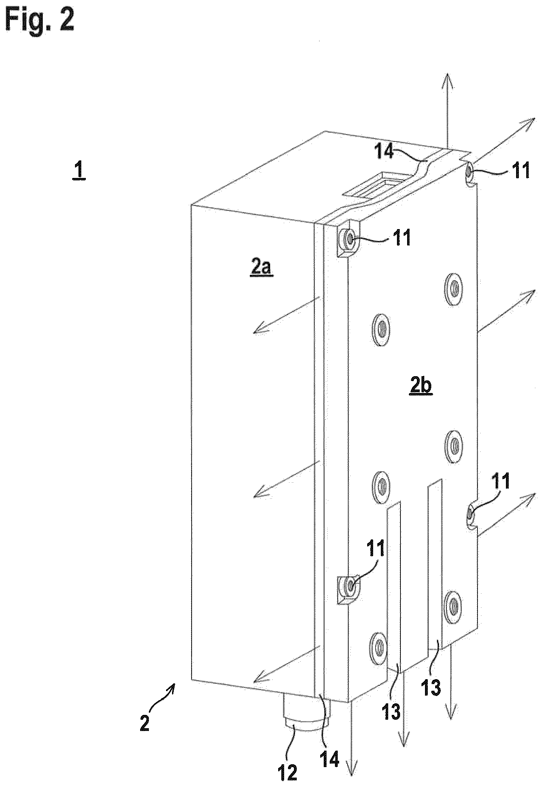

Figur 2 zeigt beispielhaft das Gehäuse 2 des optischen Sensors 1 gemäß Figur 1. Das Gehäuse 2 ist quaderförmig ausgebildet und besteht aus zwei Gehäuseelementen, nämlich einen die Sensorkomponenten und Elektronikkomponenten aufnehmenden Gehäusekörper 2a und einen Gehäusedeckel 2b, der eine Öffnung des Gehäusekörpers 2a an einer Seitenfläche abschließt. Der Gehäusedeckel 2b wird mit Schrauben 11 am Gehäusekörper 2a befestigt.

Am Gehäuse 2 ist ein Stecker-Anschluss 12 gelagert. Zudem weist die Gehäusewand des Gehäusedeckels 2b Aussparungen 13 zur Befestigung an externen Einheiten auf.

Erfindungsgemäß ist zwischen dem Gehäusekörper 2a und dem Gehäusedeckel 2b ein Anzeigeelement 14 gelagert, das gleichzeitig eine Dichtung zwischen Gehäusekörper 2a und Gehäusedeckel 2b bildet. Das Anzeigeelement 14 ist einstückig ausgebildet und besteht aus Kunststoff. Vorteilhaft ist das Anzeigeelement 14 in Form eines Hybridteils, das eine Weichkomponente enthält, ausgebildet.

Wie Figur 2 zeigt, läuft das Anzeigeelement 14 in Umfangsrichtung des Gehäuses 2 um und kann so von allen Seiten aus eingesehen werden.

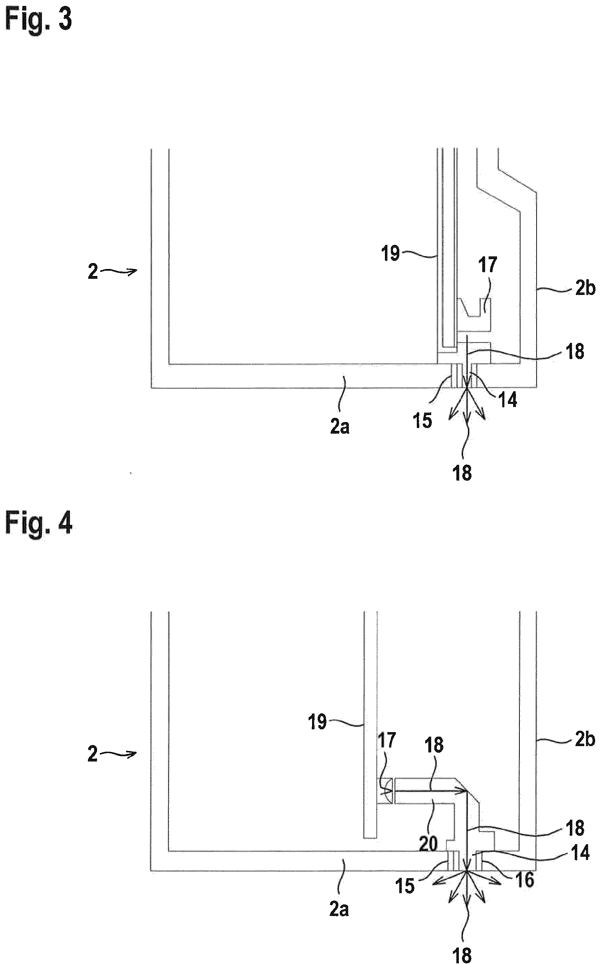

Wie die Detaildarstellungen eines Bereichs einer Kante des Gehäuses 2 gemäß den Figuren 3 bis 5 zeigen, liegt das Anzeigeelement 14 zwischen einer Grenzfläche 15 des Gehäusekörpers 2a und einer Grenzfläche 16 des Gehäusedeckels 2b.

Dem Anzeigeelement 14 sind Lichtquellen 17 in Form von Leuchtdioden zugeordnet, wodurch eine optische Anzeige für den optischen Sensor 1 gebildet wird. Die Lichtquellen 17 emittieren sichtbare, vorzugsweise farbige Lichtstrahlen 18, die in das Anzeigeelement 14 eingekoppelt werden, wodurch das Anzeigeelement 14 in dem der Lichtquelle 17 zugeordneten Bereich leuchtet. Das Anzeigeelement 14 weist dabei lichtleitende Eigenschaften auf. Zudem ist das Anzeigeelement 14 opak eingefärbt, wodurch das Anzeigeelement 14 einen Diffusor bildet. Durch das vom Anzeigeelement 14 diffus abgestrahlte Licht ist die optische Anzeige am Anzeigeelement 14 aus verschiedenen Blickwinkeln sichtbar.

Die Lichtquellen 17 können je nach Ansteuerung durch die Steuer- und Auswerteeinheit 6, welche auch die weiteren Sensorkomponenten steuert, Dauerlicht oder gepulstes Licht mit unterschiedlichen Blinkfrequenzen emittieren, wodurch unterschiedliche Sensorzustände angezeigt werden können.

Im vorliegenden Fall ist im Bereich jeder Kante des Gehäuses 2 eine Lichtquelle 17 angeordnet, mit der Lichtstrahlen 18 lokal in das Anzeigeelement 14 eingekoppelt werden.

Die Figuren 3 bis 5 zeigen jeweils den Bereich einer solchen Gehäusekante mit einer Lichtquelle 17.

Die Figuren 3 bis 5 zeigen unterschiedliche Ausführungen der Einkopplung der Lichtstrahlen 18 der Lichtquelle 17 in das Anzeigeelement 14. Bei allen Ausführungsformen ist die Lichtquelle 17 wie auch alle anderen Lichtquellen 17, direkt auf einer Leiterplatte 19 gelagert, auf welcher auch alle anderen Sensorkomponenten, und die Elektronikkomponenten der Steuer- und Auswerteeinheit 6 gelagert sind.

Bei der Ausführungsform der Figur 3 sitzt die Lichtquelle 17 mit einer Seitenwand auf der Leiterplatte 19 auf und strahlt die Lichtstrahlen 18 direkt in das Anzeigeelement 14 ein.

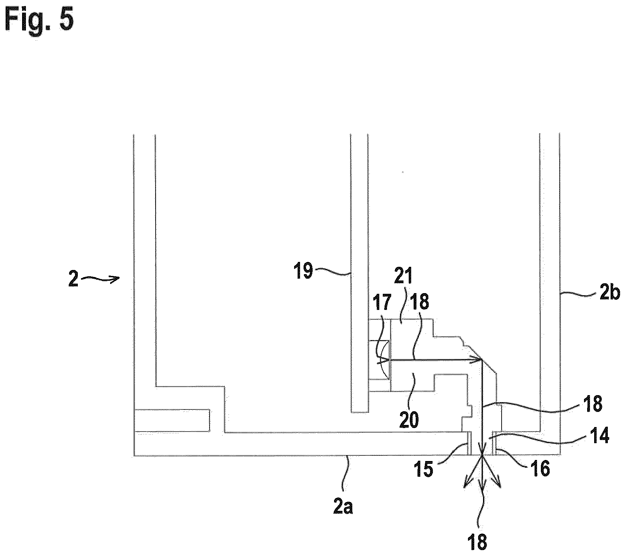

Bei den Ausführungsformen der Figuren 4 und 5 sitzt die Lichtquelle 17 mit ihrem Boden auf der Leiterplatte 19 auf. In diesem Fall werden die Lichtstrahlen 18 der Lichtquelle 17 über einen Lichtleiter 20 in das Anzeigeelement 14 eingekoppelt, wobei der Lichtleiter 20 eine Umlenkung der Lichtstrahlen 18 um 90° bewirkt.

Während bei der Ausführungsform gemäß Figur 4 die Lichtstrahlen 18 der Lichtquellen 17 direkt in den Lichtleiter 20 eingekoppelt werden, ist bei der Ausführungsform gemäß Figur 5 hierzu ein zusätzliches Einkoppelelement 21 als Bestandteil des Lichtleiters 20 vorgesehen.

Bei dem erfindungsgemäßen optischen Sensor 1 wird mit dem Anzeigeelement 14 eine Ausrichtanzeige durchführbar.

Hierzu werden selektiv einzelne Lichtquellen 17 aktivierbar, wobei mit deren beleuchteten Bereichen eine richtungsabhängige Anzeige von Fehlausrichtungen erfolgt.

Insbesondere können die Lichtquellen 17 der Gehäusekanten, wo die Ausrichtung bereits hinreichend gut ist, aktiviert werden, während die Lichtquellen 17 von den Gehäusekanten, wo keine hinreichende Ausrichtung vorliegt, deaktiviert bleiben. Leuchten alle Lichtquellen 17 auf, ist die Ausrichtung des optischen Sensors 1 erfolgreich abgeschlossen.

Erfindungsgemäß werden die Lichtquellen 17 abhängig von Sensorsignalen der Sensorkomponenten aktiviert.

Im vorliegenden Fall kann in einem Einrichtbetrieb mit dem Bildsensor 4 ein Zielobjekt aufgenommen werden. Durch die Abbildung des Zielobjekts auf dem Bildsensor 4 können Fehlstellungen des optischen Sensors 1 erkannt werden, so dass in Abhängigkeit hiervon die Lichtquellen 17 für eine richtungsabhängige Anzeige selektiv aktiviert werden.

Weiterhin können mit dem Anzeigeelement 14 Sensorzustände wie eine Betriebsbereitschaftsanzeige oder die Signalzustände des Objektfeststellungssignals angezeigt werden, wobei dann vorteilhaft alle Lichtquellen 17 aktiviert sind.

### Bezugszeichenliste

- (1): Optischer Sensor
- (2): Gehäuse
- (2a): Gehäusekörper
- (2b): Gehäusedeckel
- (3): Beleuchtungseinheit
- (4): Bildsensor
- (5): Objektiv
- (6): Steuer- und Auswerteeinheit
- (7): Schnittstelle
- (8): Objekt
- (9): Sendelichtstrahlen
- (10): Empfangslichtstrahlen
- (11): Schrauben
- (12): Stecker-Anschluss
- (13): Aussparung
- (14): Anzeigeelement
- (15): Grenzfläche
- (16): Grenzfläche
- (17): Lichtquelle
- (18): Lichtstrahl
- (19): Leiterplatte
- (20): Lichtleiter
- (21): Einkoppelelement

## Patentansprüche

1. Sensor zur Erfassung von Objekten (8) in einem Erfassungsbereich mit Sensorkomponenten, die für eine Objekterfassung oder Codeerfassung ausgebildet sind, und mit Elektronikkomponenten, die für eine Auswertung von Sensorsignalen der Sensorkomponenten ausgebildet sind, wobei die Sensorkomponenten und Elektronikkomponenten in wenigstens einem Gehäuse (2) integriert sind, **dadurch gekennzeichnet, dass** zwischen Grenzflächen (15, 16) zweier Gehäuseelemente des Gehäuses (2) ein lichtleitendes, in Umfangsrichtung des Gehäuses (2) umlaufendes Anzeigeelement (14) angeordnet ist, wobei die Gehäuseelemente unter Zwischenlagerung des Anzeigeelements (14) miteinander verbunden sind, wobei mit dem Anzeigeelement (14) eine Ausrichtanzeige durchführbar ist, und dass dem Anzeigeelement (14) in unterschiedlichen Positionen im Gehäuse (2) angeordnete in Umfangsrichtung des Gehäuses (2) umlaufende Lichtquellen (17) zugeordnet sind, die zur Emission von sichtbaren Lichtstrahlen (18) ausgebildet sind, und welche abhängig von Sensorsignalen der Sensorkomponenten aktiviert werden, und dass einzelne Lichtquellen (17) selektiv aktivierbar sind, wodurch unterschiedliche Bereiche des Anzeigeelements (14) beleuchtet sind, wobei mit den beleuchteten Bereichen eine richtungsabhängige Anzeige der Ausrichtung des Sensors relativ zu einem zu detektierenden Objekt (8) erfolgt.

2. Sensor nach Anspruch 1, **dadurch gekennzeichnet, dass** das Anzeigeelement (14) opak eingefärbt ist und einen Diffusor ausbildet.

3. Sensor nach einem der Ansprüche 1 oder 3, **dadurch gekennzeichnet, dass** ein Teil des Anzeigeelements (14) über die Grenzflächen (15, 16) hervorsteht.

4. Sensor nach einem der Ansprüche 1 bis 3, **dadurch gekennzeichnet, dass** das Anzeigeelement (14) einstückig ausgebildet ist.

5. Sensor nach einem der Ansprüche 1 bis 4, **dadurch gekennzeichnet, dass** ein Gehäuseelement einen Gehäusekörper (2a) und ein Gehäuseelement einen Gehäusedeckel (2b) ausbildet, und/oder dass die Lichtquellen (17) im Bereich von Gehäusekanten des Gehäuses (2) angeordnet sind.

6. Sensor nach einem der Ansprüche 1 bis 5, **dadurch gekennzeichnet, dass** Lichtstrahlen (18) einer Lichtquelle (17) direkt oder über einen Lichtleiter (20) in das Anzeigeelement (14) eingestrahlt werden.

7. Sensor nach einem der Ansprüche 1 bis 6, **dadurch gekennzeichnet, dass** die Lichtquellen (17) auf einer Leiterplatte (19) angeordnet sind, auf welcher auch die Sensorkomponenten und/oder Elektronikkomponenten angeordnet sind.

8. Sensor nach einem der Ansprüche 1 bis 7, **dadurch gekennzeichnet, dass** das Anzeigeelement (14) eine Betriebsbereitschaftsanzeige ausbildet, oder dass mit dem Anzeigeelement (14) Objektfeststellungssignale anzeigbar sind.

9. Sensor nach Anspruch 1 bis 8, **dadurch gekennzeichnet, dass** die Lichtquellen (17) zur Anzeige unterschiedlicher Zustandsgrößen Lichtstrahlen (18) in Form von Dauerlicht oder mit vorgegebenen Blinkfrequenzen emittieren.

10. Sensor nach einem der Ansprüche 1 bis 9, **dadurch gekennzeichnet, dass** dieser ein optischer Sensor (1), insbesondere ein Kamerasensor oder Codeleser ist.

## Claims

1. A sensor for detecting objects (8) in a detection area with sensor components which are designed for object detection or code detection, and with electronic components which are designed for evaluating sensor signals from the sensor components, wherein the sensor components and electronic components are integrated in at least one housing (2), **characterised in that** a light-conducting display element (14) running around the circumference of the housing (2) is arranged between boundary surfaces (15, 16) of two housing elements of the housing (2), the housing elements being connected to one another with intermediate mounting of the display element (14), wherein an alignment display can be carried out with the display element (14), and that the display element (14) is assigned light sources (17) which are arranged in different positions in the housing (2), rotate in the circumferential direction of the housing (2) and are designed to emit visible light beams (18), and which are activated depending on sensor signals from the sensor components, and that individual light sources (17) can be selectively activated, whereby different areas of the display element (14) are illuminated, whereby the illuminated areas provide a direction-dependent indication of the orientation of the sensor relative to an object (8) to be detected.

2. A sensor according to claim 1, **characterised in that** the display element (14) is opaque coloured and forms a diffuser.

3. A sensor according to one of claims 1 or 3, **characterised in that** a part of the display element (14) protrudes beyond the boundary surfaces (15, 16).

4. A sensor according to one of claims 1 to 3, **characterised in that** the display element (14) is formed in one piece.

5. A sensor according to one of claims 1 to 4, **characterised in that** one housing element forms a housing body (2a) and one housing element forms a housing cover (2b), and/or in that the light sources (17) are arranged in the region of housing edges of the housing (2).

6. A sensor according to one of claims 1 to 5, **characterised in that** light beams (18) from a light source (17) are irradiated directly or via a light guide (20) into the display element (14).

7. A sensor according to one of claims 1 to 6, **characterised in that** the light sources (17) are arranged on a printed circuit board (19) on which the sensor components and/or electronic components are also arranged.

8. A sensor according to one of claims 1 to 7, **characterised in that** the display element (14) forms an operational readiness display, or **in that** object detection signals can be displayed with the display element (14).

9. A sensor according to claims 1 to 8, **characterised in that** the light sources (17) emit light beams (18) in the form of continuous light or with predetermined flashing frequencies to indicate different status variables.

10. A sensor according to one of claims 1 to 9, **characterised in that** this is an optical sensor (1), in particular a camera sensor or code reader.

## Revendications

1. Capteur pour la détection d'objets (8) dans une zone de détection avec des composants de capteur conçus pour la détection d'objets ou de codes, et avec des composants électroniques conçus pour évaluer les signaux de capteur provenant des composants de capteur, dans lequel les composants de capteur et les composants électroniques sont intégrés dans au moins un boîtier (2), **caractérisé par le fait qu'**un élément d'affichage conducteur de lumière (14) courant sur la circonférence du boîtier (2) est disposé entre les surfaces de délimitation (15, 16) de deux éléments du boîtier (2), les éléments de boîtier étant reliés l'un à l'autre par un montage intermédiaire de l'élément d'affichage (14), ce qui permet d'effectuer un affichage d'alignement avec l'élément d'affichage (14), et que l'élément d'affichage (14) est équipé de sources lumineuses (17) qui sont disposées en différentes positions dans le boîtier (2), tournent dans la direction circonférentielle du boîtier (2) et sont conçues pour émettre des faisceaux de lumière visible (18), et qui sont activées en fonction des signaux du capteur provenant des composants du capteur, et que les sources lumineuses individuelles (17) peuvent être activées sélectivement, ce qui permet d'éclairer différentes zones de l'élément d'affichage (14), les zones éclairées fournissent une indication, en fonction de la direction, de l'orientation du capteur par rapport à un objet (8) à détecter.

2. Capteur selon la revendication 1, **caractérisé par le fait que** l'élément d'affichage (14) est de couleur opaque et forme un diffuseur.

3. Capteur selon l'une des revendications 1 ou 3, **caractérisé par le fait qu'**une partie de l'élément d'affichage (14) dépasse les surfaces de délimitation (15, 16).

4. Capteur selon l'une des revendications 1 à 3, **caractérisé par le fait que** l'élément d'affichage (14) est formé d'une seule pièce.

5. Capteur selon l'une des revendications 1 à 4, **caractérisé par le fait qu'**un élément de boîtier forme un corps de boîtier (2a) et qu'un élément de boîtier forme un couvercle de boîtier (2b), et/ou **par le fait que** les sources lumineuses (17) sont disposées dans la zone des bords du boîtier (2).

6. Capteur selon l'une des revendications 1 à 5, **caractérisé par le fait que** les faisceaux lumineux (18) provenant d'une source lumineuse (17) sont irradiés directement ou par l'intermédiaire d'un guide de lumière (20) dans l'élément d'affichage (14).

7. Capteur selon l'une des revendications 1 à 6, **caractérisé par le fait que** les sources lumineuses (17) sont disposées sur une carte de circuit imprimé (19) sur laquelle sont également disposés les composants du capteur et/ou les composants électroniques.

8. Capteur selon l'une des revendications 1 à 7, **caractérisé par le fait que** l'élément d'affichage (14) forme un affichage de disponibilité opérationnelle, ou **par le fait que** les signaux de détection d'objets peuvent être affichés avec l'élément d'affichage (14).

9. Capteur selon les revendications 1 à 8, **caractérisé par le fait que** les sources lumineuses (17) émettent des faisceaux lumineux (18) sous forme de lumière continue ou avec des fréquences de clignotement prédéterminées pour indiquer différentes variables d'état.

10. Capteur selon l'une des revendications 1 à 9, **caractérisé par le fait qu'**il s'agit d'un capteur optique (1), en particulier d'un capteur de caméra ou d'un lecteur de code.
